# FASCICULE DE BREVET EUROPEEN

(11) **EP 1 393 884 B1**
(45) Date de publication et mention de la délivrance du brevet: **13.02.2008**
(21) Numéro de dépôt: 03356126.7
(22) Date de dépôt: 28.08.2003
(51) Int. Cl.: B29C 70/54, B32B 5/08, B32B 27/04, B29C 35/00

(54) **Nouveaux produits composites et articles moulés obtenus à partir desdits produits**
Verbundwerkstoffe und daraus geformte Artikel
Composite products and molded articles obtained therefrom

(30) Priorité: 30.08.2002 FR 0210769
(43) Date de publication de la demande: 03.03.2004
(73) Titulaire: Hexcel Composites, 01121 Montluel Cedex (FR)
(72) Inventeur: Gallet, Régis, 38230 Pont-de-Cheruy (FR); Wilhelm, Marie-France, 38460 Panossas (FR)
(74) Mandataire: Sarlin, Laure V.

(56) Documents cités:
- FR-A- 2 036 235
- US-A- 3 666 615
- US-A- 3 674 021
- US-A- 3 935 355

## Description

La présente invention concerne le domaine technique des produits composites, plus particulièrement utilisés pour la fabrication de pièces ou articles moulés.

Les articles moulés composites, à la fois légers et robustes trouvent de nombreuses applications, notamment dans la construction aéronautique, par exemple pour la conception d'ailes d'avions, dans la construction aérospatiale, navale, par exemple pour la fabrication de mâts ou de coques de navires, dans la construction automobile ou encore dans les industries mécaniques électriques ou dans la fabrication d'articles de sport, tels que des skis, raquettes de tennis ou planches à voile.

Une des techniques de fabrication d'articles moulés, consiste à utiliser des préimprégnés constitués d'un renfort fibreux imprégné, généralement d'une résine associant un polymère thermodurcissable et un agent de réticulation, également nommé agent durcisseur, et éventuellement des additifs servant à améliorer les performances de l'article moulé obtenu.

Ces préimprégnés sont drapés dans un moule, afin d'obtenir la forme désirée et liés entre eux par réticulation du polymère thermodurcissable.

Cependant, les préimprégnés sont difficilement stockables à température ambiante. En effet, le fait que le renfort fibreux soit imprégné d'un mélange homogène de polymère thermodurcissable et de son agent de réticulation, entraîne à la température ambiante, une réaction, certes lente, de réticulation de la résine thermodurcissable.

Ainsi, un inconvénient majeur associé à l'utilisation de tels préimprégnés est qu'ils nécessitent un stockage à froid pour minimiser l'évolution de la résine pendant le stockage. De plus, des processus de contrôle de la réaction de réticulation sont souvent nécessaires lors de leur mise en oeuvre pour la conception de pièces moulées. La conséquence de cette évolution de la résine est que les préimprégnés doivent être utilisés assez rapidement, sous peine de devenir inutilisables. Des solutions fournissant des produits composites dans lesquels la matrice de résine présentent de bonnes caractéristiques de stockage à température ambiante ont donc été recherchées.

Le brevet US 3 666 615 décrit la combinaison d'une couche de résine thermodurcissable et d'une couche de durcisseur dans laquelle les deux couches sont séparées par un film qui empêche donc tout contact entre la résine et son durcisseur. Le film est constitué d'un matériau qui fond par chauffage. Ainsi, une élévation de la température permet de supprimer la barrière physique constituée par le film établissant le contact entre la couche de résine thermodurcissable et la couche de durcisseur qui sont alors à même de réagir. Une base fibreuse est incluse dans la couche de résine thermodurcissable ou dans la couche de durcisseur et joue le rôle de renfort. Néanmoins, cette technique nécessite la mise en oeuvre d'un film de nature différente de la résine thermodurcissable, ce qui complique le système.

La demande de brevet européen publiée sous le numéro EP 1 072 634 utilise des couches de matériaux réactifs adjacentes, mais, dans ce cas, il n'y a pas de barrière physique séparant la résine et son agent de réticulation. Aussi, la réaction de réticulation peut avoir lieu à la jonction des couches, lors du stockage.

Il apparaît donc que les propositions de la technique antérieure ne donnent pas entière satisfaction. Dans ce contexte, il existe donc un besoin pour des produits composites comportant d'une part, une armature de renfort et d'autre part, un système alliant une résine thermodurcissable susceptible de subir une réaction de réticulation, ce produit se devant de présenter une stabilité satisfaisante à température ambiante, facilitant ainsi son stockage.

Le produit, selon l'invention, se doit également d'être élaboré selon des techniques simples et d'être facile à mettre en oeuvre pour la conception ultérieure de pièces moulées notamment.

Un autre problème technique que vise à résoudre l'invention est de fournir un produit qui soit aisément manipulable.

Un autre objectif de l'invention est de fournir des produits modulables dans lesquels des additifs chimiques peuvent être incorporés pour optimiser les performances des articles obtenus à partir desdits produits.

Aussi, la présente invention a pour objet un produit composite comportant un renfort fibreux médian, une couche à base de résine thermodurcissable et une couche à base d'agent durcisseur pour la résine thermodurcissable. La couche de résine thermodurcissable est disposée sur l'une des grandes faces du renfort fibreux, la couche d'agent durcisseur est disposée sur l'autre grande face du renfort fibreux, le renfort fibreux constituant une barrière physique entre la résine thermodurcissable et son durcisseur.

Ainsi, l'invention utilise un renfort fibreux sec comme barrière pour séparer les réactifs disposés sur chacune de ses faces. Il suffit de chauffer et d'exercer une pression sur le produit selon l'invention, le chauffage étant effectué à une température suffisante pour obtenir la fusion de la résine thermodurcissable et de son durcisseur et entraîner leur diffusion à l'intérieur du renfort fibreux. De plus, pendant la polymérisation, le renfort sec joue le rôle de mélangeur statique dans le moule pour garantir l'homogénéité totale de la matrice thermodurcie obtenue. Le renfort fibreux offre également des passages pour permettre aux matières volatiles créées lors de la polymérisation de la résine de s'échapper.

La présente invention a également pour objet un article composite, en particulier un article composite moulé, obtenu à partir d'un produit composite défini ci-dessus.

La présente invention a également pour objet un procédé de fabrication d'un tel article composite, comprenant les étapes suivantes :
- différents produits composites selon l'invention sont empilés,
- l'empilement obtenu est maintenu sous pression réduite, soumis à des vibrations pour faciliter la diffusion de la résine thermodurcissable et de son durcisseur à l'intérieur du renfort fibreux, puis chauffé à une température suffisante pour assurer la réticulation de la résine thermodurcissable.

L'invention a également pour objet une autre variante d'un procédé de fabrication, dans laquelle l'empilement obtenu est soumis à une opération de thermocompression à une température suffisante pour assurer la réticulation de la résine thermodurcissable.

Diverses autres caractéristiques ressortent de la description faite ci-dessous en référence aux dessins annexés qui montrent, à titre d'exemples non limitatifs, des formes de réalisation de l'objet de l'invention.
- la **fig. 1** est une coupe partielle schématique d'un produit composite selon l'invention,
- les **fig. 2** à **4** sont des coupes partielles schématiques, analogues à la **fig. 1**, mais illustrant d'autres variantes de réalisation du produit composite selon l'invention.

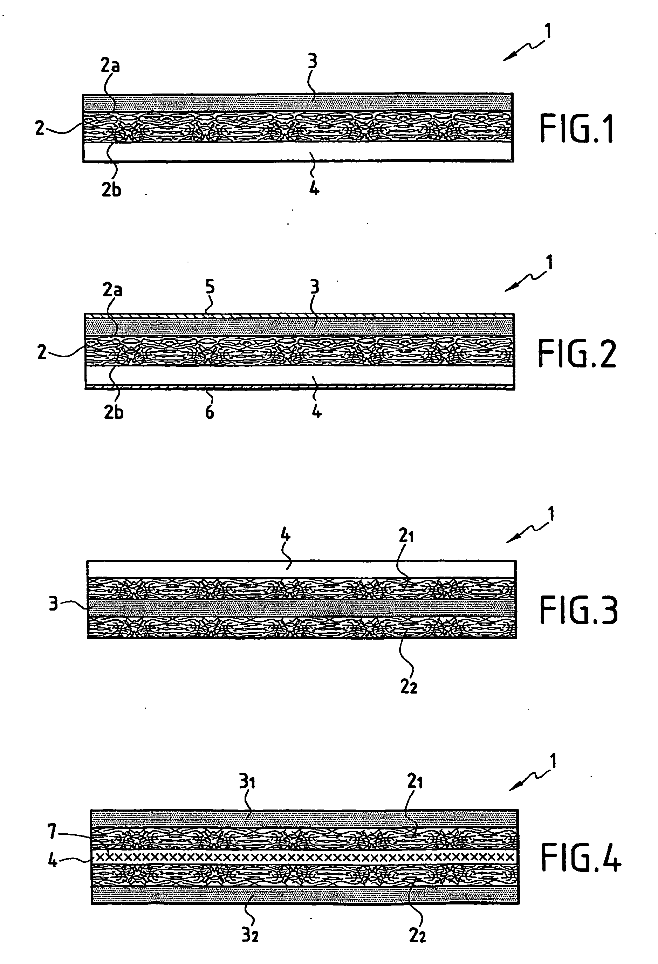

La **fig. 1** montre que le produit composite, désigné dans son ensemble par la référence **1** comporte un renfort fibreux **2**, sous forme générale de plaque, comportant sur l'une de ses grandes faces, par exemple **2a**, une couche à base de résine thermodurcissable **3**. Sur son autre grande face **2b**, est disposée une couche à base d'agent durcisseur **4**, adapté à la résine thermodurcissable. Le renfort fibreux est dit médian puisqu'il est pris en « sandwich » entre la couche de résine thermodurcissable **3** et la couche d'agent durcisseur **4**. Au moins une partie de l'épaisseur du renfort est sèche, c'est-à-dire, exempte de résine thermodurcissable et d'agent durcisseur et joue donc le rôle de barrière physique entre ces deux réactifs chimiques. De ce fait, le produit composite, selon l'invention, est stable à température ambiante, la réaction de réticulation ne pouvant pas être activée par l'agent réticulant situé physiquement à distance de la résine pendant le stockage. De plus, le produit composite, selon l'invention, devient très réactif lorsqu'il est soumis à une température entraînant tout d'abord la liquéfaction de la résine thermodurcissable et de son agent durcisseur qui pénètrent à l'intérieur du renfort puis, la réaction de réticulation de la résine pour obtenir un système thermodurci.

Les formes textiles typiques comprennent les étoffes simples, les étoffes tricotées, les étoffes serges et les étoffes à armure satin. En tant que non-tissé, on pourra, par exemple, utiliser des mats de fibres ou fils coupés, des mâts continus ou des feutres. On peut également envisager de mettre en oeuvre des nappes de fibres sans embuvage. Le renfort fibreux **2** peut être assemblé sous forme d'ébauches à une seule couche ou à couches multiples. Le pourcentage d'ouverture du renfort fibreux **2** doit être suffisant pour, d'une part, autoriser le fluage de la résine thermodurcissable et de son agent durcisseur à l'état liquide et, d'autre part, permettre l'élimination des produits volatiles créés lors de la réaction de réticulation. Néanmoins, ce pourcentage d'ouverture doit être suffisamment faible pour, d'une part, éviter, pendant le stockage, la migration des réactifs qui peuvent se trouver à l'état pâteux et, d'autre part, obtenir une imprégnation des fibres et un mélange suffisant au sein du renfort fibreux **2** après chauffage et pression. De manière avantageuse, on choisira un taux d'ouverture inférieur à 10 % et préférentiellement inférieur à 5 %.

Le renfort fibreux **2** peut être à base de fibres synthétiques ou naturelles, par exemple en fibres de verre, carbone ou aramide, mais l'invention est particulièrement appropriée aux fibres de verre et de carbone. Des systèmes de fibres hybrides ou mélangées peuvent également être envisagés. L'utilisation de fibres craquées ou sélectivement discontinues peut être avantageuse pour faciliter le drapage du produit selon l'invention et améliorer son aptitude à la mise en forme.

La masse surfacique des fibres au sein du renfort fibreux 2 est généralement compris entre 80 à 4 000 g/m², de préférence entre 100 et 2 500 g/m² et de manière particulièrement préférée de 150 et 2 000 g/m² . Le nombre de filaments de carbone peut varier de 3 000 à 320 000, de préférence encore de 12 000 à 160 000, de manière particulièrement préférable de 24 000 à 80 000. Pour les renforts en fibres de verre, des fibres de 600 à 2 400 tex sont particulièrement adaptées.

Dans la couche de résine **3**, il est possible d'utiliser des résines thermodurcissables liquides ou solides ou leur mélanges, par exemple des résines époxydes, bis-maléimide, polyester, ester vinylique ou phénolique. Les systèmes de résines préférables sont ceux qui présentent un écoulement élevé à des températures voisines de 60°C. A titre d'exemple, avec les résines époxydes, il est possible d'obtenir des viscosités de résines appropriées en mélangeant des proportions appropriées de résines époxydes solides et liquides disponibles dans le commerce, incluant, si nécessaire des solvants réactifs comme le diglycidyléther de butanediol ou le diglycidyléther de néopentylglycol. Il existe une large gamme de solvants ou diluants disponibles qui varient selon la fonctionnalité et la structure de la résine thermodurcissable. On peut citer comme diluants disponibles dans le commerce les diglycidyléthers d'alcools aliphatiques ou de polyols. On peut aussi obtenir des viscosités de résine appropriées en utilisant des mélanges de résines de masse moléculaire plus élevée. Dans certains cas, une étoffe de canevas léger comme le verre de style 104 c'est-à-dire un tissus de verre léger de 20 g/m² défini par l'IPC (Institute of Printed circuits) peut être intégrée à la couche de résine **3** pour garantir son intégrité.

La résine thermodurcissable représente typiquement de 30 % à 45 % en poids du poids total du produit composite selon l'invention et, de préférence encore, de 35%à40%.

La couche **4** contient un ou plusieurs agents durcisseurs, également nommés catalyseurs, agents de polymérisation ou réticulation qui sont par exemple choisis, dans le cas de résine thermodurcissable de type époxyde, parmi la cyanoguanidine, les amines aromatiques et aliphatiques, les anhydrides d'acides, les acides de Lewis, les urées substituées, les imidazoles et les hydrazines. Les bis-maléimides sont généralement catalysés avec la triphénylphosphine et les imidazoles. Des agents accélérateurs comme le bisphénol S, peuvent également être ajoutés aux systèmes de polymérisation d'amines à faible réactivité, et les mélanges dicyandiamidediurée. Comme avec la couche de résine, il est possible d'utiliser une étoffe de support légère. La résine et le durcisseur doivent être présents dans les rapports stoechiométriques corrects et en quantité suffisante pour donner une teneur de 30 à 45 % de résine thermodurcie dans l'article obtenu après réticulation.

Un des avantages du produit composite **1** selon l'invention est qu'il est possible de placer des additifs modifiant les performances à proximité de leur point d'action envisagé. En effet, il est possible de placer préférentiellement des retardateurs de flamme à la surface du produit composite **1** destiné à constituer la surface de l'article moulé ultérieurement fabriqué, plutôt que dans toute la structure. Les modificateurs de performance appropriés comprennent les durcisseurs comme le Nylon, la polyéthersulfone, le polyétherimide, les retardateurs de flamme (comme le borate de zinc, le polyphosphate d'ammonium), la poudre de silice, des agents anti-putréfaction ou anti-fongiques comme les isothiazolinones substituées (protection contre la moisissure), les organoétains et les composés du cuivre (applications marines). D'autres additifs de performance pourraient inclure des modificateurs d'écoulement (par exemple des silices), des pigments, des colorants, des assouplissants, des charges/extendeurs, des agents mouillants, des diluants, des agents antistatiques, des promoteurs d'adhésion, des antioxydants, des stabilisants aux UV, des additifs de libération d'air, des agents de démoulage et des inhibiteurs de corrosion. Ces additifs pourront donc être incorporés à la couche de résine **3** et/ou à la couche de durcisseur **4** de préférence, lorsque ladite couche constitue l'une des surfaces du produit **1** (nommée couche externe). Quels que soient les additifs qui sont ajoutés, il est important de s'assurer que la viscosité de la résine ou de l'agent durcisseur reste suffisamment faible pendant les étapes de polymérisation et de consolidation. En effet, leur viscosité obtenue après chauffage doit permettre leur diffusion au sein du renfort fibreux. En particulier, il est préférable que leur viscosité reste inférieure à 20 000 mPa.s à la température de cuisson.

Le produit **1** selon l'invention se présente généralement sous la forme d'une nappe continue, c'est à dire que les différentes couches de renfort fibreux **2**, de résine thermodurcissable **3** et de durcisseur **4** sont préconsolidées. C'est par exemple le cas lorsque la résine et son agent durcisseur présentent une certaine adhésivité résiduelle, également nommée « tack » qui assure la liaison entre les différentes couches. Ce type de nappe est alors facilement enroulable et pourra alors se présenter sous la forme d'un rouleau. Il peut néanmoins être prévu que le produit 1 selon l'invention se présente sous la forme de feuilles coupées individuelles, correspondants aux couches constitutives, seulement préempilées sans être liées les unes aux autres.

Aussi, selon un aspect préféré de l'invention, les propriétés adhésives de la couche de résine **3** et de la couche de durcisseur **4** seront suffisantes pour maintenir en position la couche fibreuse **2**, quelle que soit la manière dont elle est formée. Selon une variante de réalisation, seule l'épaisseur médiane du renfort fibreux reste sèche, les fibres situées sur les épaisseurs externes, c'est à dire à partir des faces **2a** ou **2b** du renfort fibreux pouvant être partiellement compactées à l'intérieur de la couche de résine **3** ou de durcisseur **4** pour améliorer l'adhésion. Dans une autre alternative, la couche fibreuse **2** peut être maintenue contre la couche de résine **3** ou contre la couche de durcisseur **4**, au moyen d'un adhésif. On comprendra que l'adhésif n'empêche pas le déplacement de la résine ou de l'agent durcisseur dans la couche fibreuse **2** pendant la production ultérieure d'un article moulé.

Dans un agencement constituant une alternative, un agent adhésif et/ou un liant peut être appliqué sur une surface ou sur les deux surfaces du produit composite **1** multicouche selon l'invention. L'agent adhésif/liant est de préférence appliqué sous forme d'un revêtement léger. Typiquement, l'agent adhésif/liant peut être appliqué en une quantité de 0,5 % à 7 % de la masse des fibres. La présence d'un tel agent favorisera notamment le maintien du produit composite **1** à l'intérieur d'un moule dans ses applications ultérieures.

De nombreuses combinaisons des couches de renfort **2**, de couches de résine **3** et de couches de durcisseur **4** sont possibles, les seules contraintes étant qu'il existe toujours une alternance entre couche de résine et couche de durcisseur et que ces couches soient séparées par un renfort fibreux, sec sur au moins une partie de son épaisseur, et établissant de ce fait une barrière physique entre lesdits composants réactifs. C'est-à-dire que dans les combinaisons envisagées, on ne peut jamais avoir une couche de résine **3** adjacente à une couche de durcisseur **4**. Par exemple, les couches externes peuvent être constituées par deux couches de film de résine ou deux couches de renfort ou une couche de film de résine et une couche de renfort. Par exemple, la couche de résine thermodurcissable 3 et/ou la couche d'agent durcisseur **4** est recouverte d'un renfort fibreux externe qui préférentiellement est exempt de résine thermodurcissable ou d'agent durcisseur respectivement, au moins sur son épaisseur externe. C'est à dire que l'une des surfaces externes, voire les deux, du produit composite **2** est constituée d'une couche de fibres sèches.

Quand le produit composite de la présente invention comprend deux couches fibreuses liées à des faces opposées de la couche de résine, les couches fibreuses peuvent être orientées dans la même direction ou dans des directions différentes. En particulier, l'orientation des fibres des peaux du matériau sandwich peut être 0°C, 90°, 0°/90° +/- 45° ou quasi isotropiques ou 0°/+45°/-45°.

Les procédés pour déposer la résine, et l'agent durcisseur sont bien connus de l'homme du métier. Ils comprennent, mais sans limitation, le revêtement à la lame ou au rouleau, le revêtement au rouleau inversé, la pulvérisation de poudre et le dépôt électrostatique. Il est possible de faire varier l'étendue d'imprégnation du renfort pour chaque combinaison de système de résines, pourvu que le produit composite fini comporte au moins une épaisseur sèche de renfort fibreux jouant le rôle de séparateur.

La couche de résine thermodurcissable **3** et la couche d'agent durcisseur **4** peuvent donc se présenter sous la forme d'un film adhérent, d'un préimprégné ou d'une pâte. Dans le cas où la surface externe du produit **1** est constituée par une couche de résine thermodurcissable où de durcisseur sous la forme d'une pâte, il pourra avantageusement être prévu, comme le montre la **fig. 2** de recouvrir cette pâte d'un film ou papier protecteur **5** ou **6** assurant sa cohérence. La présence d'un tel film qui sera ôté avant la mise en oeuvre du produit **1** permet également de faciliter sa manipulation.

La couche de résine thermodurcissable et/ou de durcisseur peut également être obtenue à partir d'une poudre dont les grains ont été amalgamés après ramollissement.

La présente invention a également pour objet les articles composites, en particulier les articles moulés obtenus à partir des produits **1** selon l'invention.

Pour obtenir un aspect de surface amélioré pour l'article moulé, il est préférable de disposer le produit composite **1** de sorte qu'une épaisseur sèche du renfort fibreux soit placée contre la surface du moule. En effet, en positionnant ainsi un produit composite **1** selon l'invention présentant un renfort fibreux externe **2b** située sur la couche de résine thermodurcissable **3** ou sur la couche d'agent durcisseur **4**, et dont l'épaisseur située en surface du produit **1**, nommée épaisseur externe est sèche, on obtient un article moulé présentant une surface de haute qualité sensiblement exempte de trous d'épingles ou de porosité de surface.

Les produits composites **1** selon l'invention peuvent être utilisés pour le moulage d'une large gamme de produits ou articles composites moulés. Des exemples comprennent les produits utilisés dans l'industrie marine comme les coques de bateaux, les mats, les espars, dans l'industrie aérospatiale comme les pièces de fuselage, dans l'industrie des moteurs comme les pièces pour carrosserie de véhicules automobiles, de fourgons et de camions, dans l'industrie des sports comme les planches de surf, les planches à voile, les skis, les bicyclettes et les bâtons de hoquet, et ceux utilisés dans d'autres industries comme les outils composites, les tubes composites et les aubes de turbine comme celles utilisées dans les éoliennes.

La présente invention a également pour objet un procédé de fabrication de tels articles composites moulés dans lequel le produit composite **1** est placé dans un moule puis polymérisé.

On pourra utiliser un ou plusieurs produits composites selon la présente invention, éventuellement en association avec des matériaux de moulage conventionnels, tels que des préimprégnés.

Différents produits composites **1** selon l'invention sont empilés dans un moule, en respectant, de préférence, l'alternance entre les couches de résine thermodurcissable et de durcisseur. L'empilement obtenu est alors maintenu sous pression réduite, soumis à des vibrations pour faciliter la diffusion de la résine thermodurcissable et de son durcisseur à l'intérieur du renfort fibreux **2**, puis chauffé à une température suffisante pour assurer la réticulation de la résine thermodurcissable. Selon une autre alternative, la réticulation pourra être effectuée par thermocompressage. Il est avantageux de réaliser l'étape de réticulation sous pression réduite, afin de favoriser l'élimination des substances volatiles dégagées.

Le mélange, la consolidation et la polymérisation de la matrice thermodurcie peuvent être réalisés de différentes manières : polymérisation à 5-15 bars dans une presse à moules appariés, polymérisation en poche sous vide avec vibrations par des rouleaux, ultrasons et analogues. Les vibrations qui peuvent être produites à la température ambiante ou pendant les stades initiaux de la polymérisation favorisent la consolidation de l'écoulement de résine dans les couches et le retrait de l'air piégé. Le cycle de polymérisation est imposé par la formulation de la matrice spécifique. Il est souhaitable de choisir un programme de polymérisation grâce auquel la température est maintenue à un point où la viscosité de la résine est basse.

Les exemples qui suivent illustrent l'invention, mais n'ont nullement un caractère limitatif.

LY 1556 : résine époxyde liquide sans solvant : diglycidyléther de bisphénol A vendu par «Vantico AG», viscosité : 9500-12000 mPa.s à 25 °C.

LY 5052 : résine époxyde liquide sans solvant, viscosité : 1000-1500 mPa.s à 25 °C, densité à 25° C : 1,17 g/cm³, point éclair ≥140° C vendu par Vantico AG.

HY 5052 : durcisseur liquide sans solvant mélange de polyamines, viscosité : 40-60 mPa.s à 25 °C, densité à 25° C : 0 ,94 g/cm³, point éclair ≥ 110° C vendu par Vantico AG.

GT 6071 : résine époxyde solide, F = 70-75 °C, viscosité à 25° C (dans une solution à 40 % de butylcarbitol) : 160-190 mPa.s; indice d'époxyde : 2,15-2,22 équivalents/kg ; équivalent époxyde : 450-465 g/équivalent ; densité à 25°C : 1,18 ; point éclair > 200° C, vendu par Vantico AG.

Curimid NB : 1-benzyl-2-méthylimidazole, vendu par Borregaard Industries Ltd.

### Exemple 1

On réalise un produit composite **1** selon la **fig.3** de structure multicouche suivante : couche **2₂** d'étoffe de verre (tissus satin de 8 commercialisé sous la référence 7781 par HEXCEL FABRICS) de masse surfacique 303 g/m², recouverte d'une couche **3** de résine thermodurcissable LY1556, recouverte d'un deuxième renfort fibreux **2₁** identique au premier **2₂**, elle-même recouverte d'une couche **4** d'agent durcisseur HY 5052. La teneur en résine thermodurcissable avant la polymérisation est d'environ 43 % en poids. La formulation est LY 5052 (72,5 %), HY 5052 (27,5 %).

Un stratifié est construit par empilement de cinq produits composites **1** selon l'exemple 1. Quelques vibrations sont appliquées à la température ambiante. La réaction de polymérisation est menée pendant 12 heures à 80°C sous pression réduite. Le stratifié obtenu présente un aspect satisfaisant, il est de couleur vert pâle et les composants ont été totalement mélangés.

### Exemple 2

On réalise un produit composite **1** de structure multicouche suivante : couche **2₂** d'étoffe de verre (commercialisée sous la référence 7781) de masse surfacique 303 g/m², recouverte d'une couche **4** d'agent durcisseur Curimid NB incorporant un canevas léger de 20 g/m², recouverte d'un deuxième renfort fibreux **2₁** identique au premier **2₂**, elle-même recouverte d'une couche **3** de résine thermodurcissable à base de LY 1556 et GT 6071. La formulation est LY 1556 (64,4 %), GT 6071 (27,6 %) et Curimid NB (8,0 %).

La teneur en résine thermodurcissable avant la polymérisation est d'environ 44 % en poids. Le produit composite **1** présente une haute pégosité et un haut écoulement.

Un stratifié est construit par empilement de quatre produits composites **1** selon l'exemple 2. Quelques vibrations sont appliquées à 50°C. La réaction de polymérisation est menée pendant 4 heures à 80°C sous pression réduite. Le stratifié obtenu présente un aspect satisfaisant, il est de couleur foncée.

### Exemple 3

On réalise un produit composite **1** selon la **fig. 4** de structure multicouche suivante : couche **3₂** de résine thermodurcissable à base de LY 1556 et GT 6071, recouverte d'une couche **2₂** d'étoffe de verre (commercialisée sous la référence 7781) de masse surfacique 303 g/m², recouverte d'une couche **4** d'agent durcisseur Curimid NB incorporant un canevas **7** léger de 20 g/m², recouverte d'un deuxième renfort fibreux **2₁** identique au premier **2₂**, elle-même recouverte d'une couche **3₁** de résine thermodurcissable à base de LY 1556 et GT 6071. La formulation est LY 1556 (64,4 %), GT 6071 (27,6 %) et Curimid NB (8,0 %).

La teneur en résine thermodurcissable avant la polymérisation est d'environ 44 % en poids. Le produit composite **1** présente une haute pégosité et un haut écoulement.

Un stratifié est construit par empilement de quatre produits composites **1** selon l'exemple 3. Quelques vibrations sont appliquées à 50°C. La réaction de polymérisation est menée pendant 2,5 heures à 80°C sous pression réduite. Le stratifié obtenu présente un aspect satisfaisant, il est de couleur caramel.

## Revendications

1. Produit composite **(1)** comportant un renfort fibreux **(2)** médian, une couche à base de résine thermodurcissable **(3)** et une couche à base d'agent durcisseur **(4)** pour la résine thermodurcissable, **caractérisé en ce que** la couche à base de résine thermodurcissable **(3)** est disposée sur l'une des grandes faces **(2a)** du renfort fibreux **(2)**, la couche à base d'agent durcisseur **(4)** est disposée sur l'autre grande face **(2b)** du renfort fibreux **(2)**, le renfort fibreux **(2)** constituant une barrière physique entre la résine thermodurcissable et son durcisseur.

2. Produit composite **(1)** selon la revendication 1, **caractérisé en ce qu'**au moins une partie de l'épaisseur du renfort fibreux **(2)** est exempt de résine thermodurcissable et d'agent durcisseur.

3. Produit composite **(1)** selon la revendication 1 ou 2, **caractérisé en ce que** la couche de résine thermodurcissable **(3)** est recouverte d'un renfort fibreux externe **(2₂).**

4. Produit composite **(1)** selon la revendication 3, **caractérisé en ce que** le renfort fibreux externe **(2₂)** est exempt de résine thermodurcissable, au moins sur son épaisseur externe.

5. Produit composite **(1)** selon la revendication 1 ou 2, **caractérisé en ce que** la couche d'agent durcisseur **(4)** est recouverte d'un renfort fibreux externe **(2₂)**.

6. Produit composite **(1)** selon la revendication 5, **caractérisé en ce que** le renfort fibreux externe **(2₂)** est exempt d'agent durcisseur.

7. Produit composite **(1)** selon la revendication 1 ou 2, **caractérisé en ce que** la couche de résine thermodurcissable **(3)** et la couche d'agent durcisseur **(4)** sont toutes deux recouvertes d'un renfort fibreux externe **(2₂)**.

8. Produit composite **(1)** selon la revendication 7, **caractérisé en ce que** les deux renforts externes **(2₂)** sont exempts de résine thermodurcissable et d'agent durcisseur au moins sur leur épaisseur externe.

9. Produit composite **(1)** selon l'une des revendications 1 à 8, **caractérisé en ce que** la couche de résine thermodurcissable **(3)** se présente sous la forme d'un film adhérent.

10. Produit composite **(1)** selon l'une des revendications 1 à 8, **caractérisé en ce que** la couche de résine thermodurcissable **(3)** se présente sous la forme d'un pré imprégné.

11. Produit composite **(1)** selon l'une des revendications 1 à 8, **caractérisé en ce que** la couche de résine thermodurcissable **(3)** se présente sous la forme d'une pâte.

12. Produit composite **(1)** selon les revendications 1, 2, 5 ou 6 **caractérisé en ce que** la couche de résine thermodurcissable **(3)** se présente sous la forme d'une pâte recouverte d'un film ou papier protecteur **(5)** assurant sa cohérence.

13. Produit composite **(1)** selon l'une des revendications 1 à 8, **caractérisé en ce que** la couche de résine thermodurcissable **(3)** est obtenue à partir d'une poudre dont les grains ont été amalgamés après ramollissement.

14. Produit composite **(1)** selon l'une des revendications 1 à 8, **caractérisé en ce que** l'agent durcisseur **(4)** se présente sous la forme d'un film adhérent.

15. Produit composite **(1)** selon l'une des revendications 1 à 8, **caractérisé en ce que** l'agent durcisseur **(4)** se présente sous la forme d'un pré imprégné.

16. Produit composite **(1)** selon l'une des revendications 1 à 8, **caractérisé en ce que** l'agent durcisseur **(4)** se présente sous la forme d'une pâte.

17. Produit composite **(1)** selon la revendication 16, **caractérisé en ce que** l'agent durcisseur **(4)** se présente sous la forme d'une pâte recouverte d'un film ou papier protecteur **(6)** assurant sa cohérence.

18. Produit composite **(1)** selon l'une des revendications 1 à 8, **caractérisé en ce que** l'agent durcisseur est obtenu à partir d'une poudre dont les grains ont été amalgamés après ramollissement.

19. Produit composite **(1)** selon l'une des revendications 1 à 18, **caractérisé en ce que** le renfort fibreux **(2)** est constitué de fils unidirectionnels.

20. Produit composite **(1)** selon l'une des revendications 1 à 18, **caractérisé en ce que** le renfort fibreux **(2)** est constitué d'un tissu.

21. Produit composite **(1)** selon l'une des revendications 1 à 18, **caractérisé en ce que** le renfort fibreux **(2)** est constitué d'un non tissé.

22. Produit composite **(1)** selon l'une des revendications 1 à 18, **caractérisé en ce que** le renfort fibreux **(2)** est en fibres synthétiques ou naturelles, par exemple en fibres de carbone, verre ou aramide.

23. Produit composite **(1)** selon l'une des revendications 1 à 18, **caractérisé en ce que** la résine thermodurcissable est choisie parmi les résines époxy, polyester, vinylester, bismaléimide, phénolique ou leur mélange.

24. Produit composite **(1)** selon la revendication 23, **caractérisé en ce que** la couche de résine thermodurcissable **(4)** contient en outre un solvant, comme les éthers glycidiques, les alcools aliphatiques et les polyols, en particulier le butanedioldiglycidyléther ou le néopentylglycoldiglycidyléther.

25. Produit composite **(1)** selon l'une des revendications 1 à 18, **caractérisé en ce que** l'agent durcisseur est choisi parmi les cyanoguanidines, amines aliphatiques et aromatiques, anhydrides d'acide, acides de lewis, imidazoles, urées substituées et hydrazines.

26. Article composite obtenu à partir d'un produit composite **(1)** selon l'une quelconque des revendications 1 à 25.

27. Article composite moulé obtenu à partir d'un produit composite **(1)** selon l'une quelconque des revendications 1 à 25.

28. Procédé de fabrication d'un article composite selon les revendications 26 ou 27, comprenant les étapes suivantes :
- différents produits composites **(1)** selon l'une des revendications 1 à 25 sont empilés,
- l'empilement obtenu est maintenu sous pression réduite, soumis à des vibrations pour faciliter la diffusion de la résine thermodurcissable et de son durcisseur à l'intérieur du renfort fibreux, puis chauffé à une température suffisante pour assurer la réticulation de la résine thermodurcissable.

29. Procédé de fabrication d'un article composite selon la revendication 26 ou 27, comprenant les étapes suivantes :
- différents produits composites **(1)** selon l'une des revendications 1 à 25 sont empilés,
- l'empilement obtenu est soumis à une opération de thermocompression à une température suffisante pour assurer la réticulation de la résine thermodurcissable.

30. Procédé selon la revendication 28 ou 29, **caractérisé en ce que** la réaction de réticulation est menée sous pression réduite.

## Claims

1. A composite product **(1)** including a median fiber reinforcement **(2)**, a layer based on thermosettable resin **(3)** and a layer based on hardener **(4)** for the thermosettable resin, **characterized in that** the layer based on thermosettable resin **(3)** is positioned on one of the large faces **(2a)** of the fiber reinforcement **(2)**, the layer based on hardener **(4)** is positioned on the other large face **(2b)** of the fiber reinforcement **(2)**, the fiber reinforcement **(2)** forming a physical barrier between the thermosettable resin and its hardener.

2. The composite product **(1)** according to claim 1, **characterized in that** at least one portion of the thickness of the fiber reinforcement **(2)** is free of thermosettable resin and of hardener.

3. The composite product **(1)** according to claim 1 or 2, **characterized in that** the thermosettable resin layer **(3)** is covered with an external fiber reinforcement **(2₂).**

4. The composite product **(1)** according to claim 3, **characterized in that** the external fiber reinforcement (2₂) is free of thermosettable resin, at least on its external thickness.

5. The composite product **(1)** according to claim 1 or 2, **characterized in that** the hardener layer **(4)** is covered with an external fiber reinforcement **(2₂).**

6. The composite product **(1)** according to claim 5, **characterized in that** the external fiber reinforcement **(2₂)** is free of hardener.

7. The composite product **(1)** according to claim 1 or 2, **characterized in that** the thermosettable resin layer (3) and the hardener layer **(4)** are both covered with an external fiber reinforcement **(2₂).**

8. The composite product **(1)** according to claim 7, **characterized in that** both external reinforcements **(2₂)** are free of thermosettable resin and of hardener at least on their external thickness.

9. The composite product **(1)** according to any of claims 1 to 8, **characterized in that** the thermosettable resin layer **(3)** appears as an adherent film.

10. The composite product **(1)** according to any of claims 1 to 8, **characterized in that** the thermosettable resin layer **(3)** appears as a prepreg.

11. The composite product **(1)** according to any of claims 1 to 8, **characterized in that** the thermosettable resin layer **(3)** appears as a paste.

12. The composite product **(1)** according to claims 1, 2, 5 or 6, **characterized in that** the thermosettable resin layer **(3)** appears as a paste covered with a protective film or paper **(5)** providing its coherence.

13. The composite product **(1)** according to any of claims 1 to 8, **characterized in that** the thermosettable resin layer **(3)** is obtained from a powder for which the grains were combined after softening.

14. The composite product **(1)** according to any of claims 1 to 8, **characterized in that** the hardener **(4)** appears as an adherent film.

15. The composite product **(1)** according to any of claims 1 to 8, **characterized in that** the hardener **(4)** appears as a prepreg.

16. The composite product **(1)** according to any of claims 1 to 8, **characterized in that** the hardener **(4)** appears as a paste.

17. The composite product **(1)** according to claim 16, **characterized in that** the hardener **(4)** appears as a paste covered with a protective film or paper **(6)** providing its coherence.

18. The composite product **(1)** according to any of claims 1 to 8, **characterized in that** the hardener is obtained from a powder for which the grains were combined after softening.

19. The composite product **(1)** according to any of claims 1 to 18, **characterized in that** the fiber reinforcement **(2)** consists of unidirectional yarns.

20. The composite product **(1)** according to any of claims 1 to 18, **characterized in that** the fiber reinforcement **(2)** consists of woven material.

21. The composite product **(1)** according to any of claims 1 to 18, **characterized in that** the fiber reinforcement **(2)** consists of non-woven material.

22. The composite product **(1)** according to any of claims 1 to 18, **characterized in that** the fiber reinforcement **(2)** is made in synthetic or natural fibers, for example in carbon, glass or aramide fibers.

23. The composite product **(1)** according to any of claims 1 to 18, **characterized in that** the thermosettable resin is selected from epoxy, polyester, vinylester, bismaleimide, phenol resins or a mixture thereof.

24. The composite product **(1)** according to claim 23, **characterized in that** the thermosettable resin layer **(3)** further contains a solvent, such as glycidic ethers, aliphatic alcohols and polyols, in particular butanediol diglycidyl ether or neopentylglycol diglycidyl ether.

25. The composite product **(1)** according to any of claims 1 to 18, **characterized in that** the hardener is selected from cyanoguanidines, aliphatic and aromatic amines, acid anhydrides, Lewis acids, imidazoles, substituted ureas and hydrazines.

26. A composite article obtained from a composite product **(1)** according to any of claims 1 to 25.

27. A molded composite article obtained from a composite product **(1)** according to any of claims 1 to 25.

28. A method for making a composite article according to claims 26 or 27, comprising the following steps:
- various composite products **(1)** according to any of claims 1 to 25 are stacked,
- the obtained stack is maintained under reduced pressure, subject to vibrations for facilitating diffusion of the thermosettable resin and of its hardener within the fiber reinforcement, and then heated to a sufficient temperature for providing cross-linking of the thermosettable resin.

29. A method for making a composite article according to claim 26 or 27, comprising the following steps:
- various composite products **(1)** according to any of claims 1 to 25 are stacked,
- the obtained stack is subject to a thermocompression operation at a sufficient temperature for providing cross-linking of the thermosettable resin.

30. The method according to claims 28 or 29, **characterized in that** the cross-linking reaction is conducted under reduced pressure.

## Patentansprüche

1. Verbundprodukt (1) umfassend eine mittlere Faserverstärkung (2), eine Schicht auf Basis eines Duroplasten (3) und eine Schicht auf Basis eines Härtungsmittels (4) für den Duroplasten, **dadurch gekennzeichnet, daß** die Schicht auf Duroplastbasis (3) auf einer der großen Flächen (2a) der Faserverstärkung (2) angeordnet ist, die Schicht auf Basis eines Härtungsmittels (4) auf der anderen großen Fläche (2b) der Faserverstärkung (2) angeordnet ist, wobei die Faserverstärkung (2) eine physische Barriere zwischen dem Duroplasten und dessen Härtungsmittel bildet.

2. Verbundprodukt (1) nach Anspruch 1, **dadurch gekennzeichnet, daß** wenigstens ein Teil der Dicke der Faserverstärkung (2) keinen Duroplasten und kein Härtungsmittel aufweist.

3. Verbundprodukt (1) nach Anspruch 1 oder 2, **dadurch gekennzeichnet, daß** die Duroplastschicht (3) mit einer äußeren Faserverstärkung (2₂) überzogen ist.

4. Verbundprodukt (1) nach Anspruch 3, **dadurch gekennzeichnet, daß** die äußere Faserverstärkung (2₂) wenigstens über ihre äußere Dicke keinen Duroplasten aufweist.

5. Verbundprodukt (1) nach Anspruch 1 oder 2, **dadurch gekennzeichnet, daß** die Härtungsmittelschicht (4) mit einer äußeren Faserverstärkung (2₂) überzogen ist.

6. Verbundprodukt (1) nach Anspruch 5, **dadurch gekennzeichnet, daß** die äußere Faserverstärkung (2₂) kein Härtungsmittel aufweist.

7. Verbundprodukt (1) nach Anspruch 1 oder 2, **dadurch gekennzeichnet, daß** die Duroplastschicht (3) und die Härtungsmittelschicht (4) beide mit einer äußeren Faserverstärkung (2₂) überzogen sind.

8. Verbundprodukt (1) nach Anspruch 7, **dadurch gekennzeichnet, daß** die beiden Außenverstärkungen (2₂) wenigstens über ihre äußere Dicke keinen Duroplasten und kein Härtungsmittel aufweisen.

9. Verbundprodukt (1) nach einem der Ansprüche 1 bis 8, **dadurch gekennzeichnet, daß** die Duroplastschicht (3) in Form eines Haftfilms vorliegt.

10. Verbundprodukt (1) nach einem der Ansprüche 1 bis 8, **dadurch gekennzeichnet, daß** die Duroplastschicht (3) in Form eines Prepregs vorliegt.

11. Verbundprodukt (1) nach einem der Ansprüche 1 bis 8, **dadurch gekennzeichnet, daß** die Duroplastschicht (3) in Form einer breiartigen Masse vorliegt.

12. Verbundprodukt (1) nach den Ansprüchen 1, 2, 5 oder 6, **dadurch gekennzeichnet, daß** die Duroplastschicht (3) in Form einer breiartigen Masse vorliegt, die mit einem Schutzfilm oder -papier (5) überzogen ist, der bzw. das deren Zusammenhalt sicherstellt.

13. Verbundprodukt (1) nach einem der Ansprüche 1 bis 8, **dadurch gekennzeichnet, daß** die Duroplastschicht (3) aus einem Pulver erhalten wird, dessen Körner nach der Erweichung amalgamiert worden sind.

14. Verbundprodukt (1) nach einem der Ansprüche 1 bis 8, **dadurch gekennzeichnet, daß** das Härtungsmittel (4) in Form eines Haftfilms vorliegt.

15. Verbundprodukt (1) nach einem der Ansprüche 1 bis 8, **dadurch gekennzeichnet, daß** das Härtungsmittel (4) in Form eines Prepregs vorliegt.

16. Verbundprodukt (1) nach einem der Ansprüche 1 bis 8, **dadurch gekennzeichnet, daß** das Härtungsmittel (4) in Form einer breiartigen Masse vorliegt.

17. Verbundprodukt (1) nach Anspruch 16, **dadurch gekennzeichnet, daß** das Härtungsmittel (4) in Form einer breiartigen Masse vorliegt, die mit einem Schutzfilm oder -papier (6) überzogen ist, der bzw. das deren Zusammenhalt sicherstellt.

18. Verbundprodukt (1) nach einem der Ansprüche 1 bis 8, **dadurch gekennzeichnet, daß** das Härtungsmittel aus einem Pulver erhalten wird, dessen Körner nach der Erweichung amalgamiert worden sind.

19. Verbundprodukt (1) nach einem der Ansprüche 1 bis 18, **dadurch gekennzeichnet, daß** die Faserverstärkung (2) von unidirektionalen Fäden gebildet ist.

20. Verbundprodukt (1) nach einem der Ansprüche 1 bis 18, **dadurch gekennzeichnet, daß** die Faserverstärkung (2) von einem Gewebe gebildet ist.

21. Verbundprodukt (1) nach einem der Ansprüche 1 bis 18, **dadurch gekennzeichnet, daß** die Faserverstärkung (2) von einem Faservlies gebildet ist.

22. Verbundprodukt (1) nach einem der Ansprüche 1 bis 18, **dadurch gekennzeichnet, daß** die Faserverstärkung (2) aus Synthetik- oder Naturfasern, beispielsweise aus Kohlenstoff-, Glas- oder Aramidfasern besteht.

23. Verbundprodukt (1) nach einem der Ansprüche 1 bis 18, **dadurch gekennzeichnet, daß** der Duroplast unter den Epoxid-, Polyester-, Vinylester-, Bismaleimid-, Phenolharzen oder deren Mischungen ausgewählt ist.

24. Verbundprodukt (1) nach Anspruch 23, **dadurch gekennzeichnet, daß** die Duroplastschicht (3) ferner ein Lösungsmittel, wie Glycidether, aliphatische Alkohole und Polyole, insbesondere Butandioldiglycidylether oder Neopentylglycoldiglycidylether enthält.

25. Verbundprodukt (1) nach einem der Ansprüche 1 bis 18, **dadurch gekennzeichnet, daß** das Härtungsmittel unter den Cyanoguanidinen, aliphatischen und aromatischen Aminen, Säureanhydriden, Lewis-Säuren, Imidazolen, substituierten Harnstoffen und Hydrazinen ausgewählt ist.

26. Verbundartikel, der aus einem Verbundprodukt (1) nach irgendeinem der Ansprüche 1 bis 25 erhalten wird.

27. Geformter Verbundartikel, der aus einem Verbundprodukt (1) nach irgendeinem der Ansprüche 1 bis 25 erhalten wird.

28. Verfahren zur Herstellung eines Verbundartikels nach den Ansprüchen 26 oder 27, das die folgenden Schritte umfaßt:
- unterschiedliche Verbundprodukte (1) nach einem der Ansprüche 1 bis 25 werden aufgeschichtet;
- die erhaltene Aufschichtung wird unter vermindertem Druck gehalten, Schwingungen ausgesetzt, um die Diffusion des Duroplasten und seines Härtungsmittels in das Innere der Faserverstärkung zu erleichtern, anschließend auf eine Temperatur erhitzt, die ausreichend ist, um die Vernetzung des Duroplasten zu gewährleisten.

29. Verfahren zur Herstellung eines Verbundartikels nach Anspruch 26 oder 27, das die folgenden Schritte umfaßt:
- unterschiedliche Verbundprodukte (1) nach einem der Ansprüche 1 bis 25 werden aufgeschichtet,
- die erhaltene Aufschichtung wird einem Thermokompressionsvorgang bei einer Temperatur unterzogen, die ausreichend ist, um die Vernetzung des Duroplasten zu gewährleisten.

30. Verfahren nach Anspruch 28 oder 29, **dadurch gekennzeichnet, daß** die Vernetzungsreaktion unter vermindertem Druck geführt wird.
